# EUROPÄISCHE PATENTSCHRIFT

(11) **EP 2 651 720 B1**
(45) Veröffentlichungstag und Bekanntmachung des Hinweises auf die Patenterteilung: **13.09.2017**
(21) Anmeldenummer: 11767700.5
(22) Anmeldetag: 11.10.2011
(51) Int. Cl.: B60T 7/04

(54) **VERFAHREN ZUM EINSTELLEN DER VON EINER FESTSTELLBREMSE AUSGEÜBTEN KLEMMKRAFT**
METHOD FOR ADJUSTING THE CLAMPING FORCE APPLIED BY A PARKING BRAKE
PROCÉDÉ DE RÉGLAGE DE LA FORCE DE SERRAGE EXERCÉE PAR UN FREIN DE STATIONNEMENT

(30) Priorität: 17.12.2010 DE 102010063413
(43) Veröffentlichungstag der Anmeldung: 23.10.2013
(73) Patentinhaber: Robert Bosch GmbH, 70442 Stuttgart (DE)
(72) Erfinder: BIELTZ, Karsten, 74395 Mudelsheim (DE); HAUBER, Simon, 71691 Freiberg Am Neckar (DE)
(86) Internationale Anmeldenummer: PCT/EP2011/067674
(87) Internationale Veröffentlichungsnummer: WO 2012/079801

(56) Entgegenhaltungen:
- WO-A1-2004/022394
- WO-A1-2006/003042
- WO-A1-2008/017613
- WO-A1-2009/053429
- WO-A1-2010/100276
- DE-A1- 10 356 096
- DE-A1-102004 060 454
- DE-A1-102007 026 447
- US-A1- 2009 195 058

## Beschreibung

Die Erfindung bezieht sich auf ein Verfahren zum Einstellen der von einer Feststellbremse ausgeübten Klemmkraft in einem Fahrzeug.

### Stand der Technik

Feststell- bzw. Parkbremsen werden in Fahrzeugen eingesetzt, um im Stillstand eine das Fahrzeug festsetzende Klemmkraft in einer Fahrzeugbremse zu erzeugen. Bekannt ist es beispielsweise aus der DE 103 61 042 B3, als Aktuator der Feststellbremse einen elektrischen Bremsmotor einzusetzen, bei dessen Betätigung ein Bremskolben, welcher Träger eines Bremsbelages ist, axial in Richtung auf eine Bremsscheibe verstellt wird.

Darüber hinaus ist es bekannt, zur Klemmkraftunterstützung den in einer hydraulischen Fahrzeugbremse generierten Hydraulikdruck einzusetzen, so dass sich die Klemmkraft aus einem elektromotorischen Anteil und einem hydraulischen Anteil zusammensetzt.

In der WO 2010/100276 A1 wird eine elektromechanisch betätigbare Feststellbremse mit einem elektrischen Bremsmotor beschrieben, der Bremsbeläge gegen eine Bremsscheibe kraftbeaufschlagt, um die gewünschte Klemmkraft bei Fahrzeugstillstand bereitzustellen. Auch die DE 10 2004 060 454 A1 betrifft eine Feststellbremse mit einer elektromotorischen Bremsvorrichtung zur Erzeugung der gewünschten Klemmkraft.

Aus der WO 2009/053429 A1 ist eine Feststellbremse für ein Fahrzeug mit elektrischem Bremsmotor bekannt, dessen mechanischer Zuspannkraft der hydraulische Vordruck der Fahrzeugbremse überlagert wird, so dass sich die de Zuspannkraft aus der Summe der Kräfte aus hydraulischem Vordruck und mechanischer Zuspannkraft ergibt. Für das Lösen der elektromechanischen Zuspannkraft wird der hydraulische Vordruck berücksichtigt, um die Genauigkeit bei der Einstellung der Zuspannkraft und des Lüftspiels zu verbessern.

Offenbarung der Erfindung

Der Erfindung liegt die Aufgabe zugrunde, mit einfachen Maßnahmen die Klemmkraft in einer Feststellbremse eines Fahrzeugs genau einzustellen.

Diese Aufgabe wird erfindungsgemäß mit den Merkmalen des Anspruches 1 gelöst. Die Unteransprüche geben zweckmäßige Weiterbildungen an.

Das erfindungsgemäße Verfahren bezieht sich auf eine elektromechanische Feststellbremse in einem Fahrzeug, die einen elektrischen Bremsmotor aufweist, resultierende Zuspannkraft aus der Summe der Kräfte aus hydraulischem Vordruck und mechanischer Zuspannkraft ergibt.

Für das Lösen der elektromechanischen Zuspannkraft wird der hydraulische Vordruck berücksichtigt, um die Genauigkeit bei der Einstellung der Zuspannkraft und des Lüftspiels zu verbessern.

Die DE 103 45 485 A1 offenbart eine Kombination einer hydraulischen Fahrzeugbremse mit einer elektromotorischen Bremsvorrichtung, die beide auf einen gemeinsamen Bremskolben wirken, um beim Parken eine Klemmkraft zu erzeugen. Entsprechend addieren sich der elektromotorisch und der hydraulisch erzeugte Anteil der Klemmkraft.

Gemäß der WO 2008/017613 A1 besteht eine elektromechanische betätigbare Feststellbremse aus einer Trommelbremse mit einer Bremstrommel, die fest mit einem Kraftfahrzeugrad verbunden ist, und einem elektromechanischen Aktuator, dessen Rotationsbewegung Bremsbacken gegen die Innenseite der Bremstrommel beaufschlagt.

### Offenbarung der Erfindung

Der Erfindung liegt die Aufgabe zugrunde, mit einfachen Maßnahmen die Klemmkraft in einer Feststellbremse eines Fahrzeugs genau einzustellen.

Diese Aufgabe wird erfindungsgemäß mit den Merkmalen des Anspruches 1 gelöst. Die Unteransprüche geben zweckmäßige Weiterbildungen an.

Das erfindungsgemäße Verfahren bezieht sich auf eine elektromechanische Feststellbremse in einem Fahrzeug, die einen elektrischen Bremsmotor aufweist, über den eine Klemmkraft erzeugbar ist. Dies erfolgt beispielsweise derart, dass die Rotationsbewegung des Bremsmotors in eine axiale Stellbewegung eines Bremskolbens übertragen wird, der Träger eines Bremsbelages ist, welcher gegen eine Bremsscheibe gedrückt wird.

Die Feststellbremse ist mit einer Zusatzbremsvorrichtung versehen, um bedarfsweise zusätzlich zur elektromechanischen Klemmkraft des elektrischen

Bremsmotors auch über die Zusatzbremsvorrichtung einen Klemmkraftanteil bereitstellen zu können. Bei der Zusatzbremsvorrichtung handelt es sich um die
hydrauliche Fahrzeugbremse des Fahrzeugs, deren Hydraulikdruck auf den Bremskolben wirkt.

Zur Plausibiliserung einer Klemmkraft, welche über die elektromotorische Bremsvorrichtung bereitgestellt werden soll, wird eine dem Ist-Verlauf entsprechende Klemmkraftkennlinie zeit- oder wegabhängig ermittelt und zumindest abschnittsweise mit einem zugehörigen Soll-Kennlinienbereich verglichen. Dieser Soll-Kennlinienbereich hängt von Kennlinien der Klemmkraft für Bremsbeläge in unterschiedlichem Verschleißzustand ab. Eine untere Soll-Kennlinie kennzeichnet hierbei einen neuen oder wenig verschlissenen Bremsbelag, eine obere Kennlinie einen stärkeren verschlissenen Bremsbelag. Grundsätzlich ist es möglich, eine Soll-Kennlinie für einen neuen Bremsbelag und eine Soll-Kennlinie für einen maximal verbrauchten Bremsbelag zur Begrenzung des Soll-Kennlinienbereichs zu verwenden.

Bei dem Vergleich der tatsächlichen, ermittelten Klemmkraftkennlinie mit dem Soll-Kennlinienbereich wird überprüft, ob die tatsächliche Klemmkraftkennlinie innerhalb des Soll-Kennlinienbereiches liegt. Sofern dies der Fall ist, kann vorn einem ordnungsgemäßen Zustand der Feststellbremse ausgegangen werden und die Zielklemmkraft in der gewünschten Weise entweder ausschließlich über eine Betätigung der elektromotorischen Bremsvorrichtung oder zusätzlich über die Zusatzbremsvorrichtung erzeugt werden.

Liegt dagegen die betrachtete Klemmkraftkennlinie außerhalb des Soll-Kennlinienbereichs, so werden zweckmäßigerweise weitere Maßnahmen ergriffen, beispielsweise eine zusätzliche Unterstützung durch die Zusatzbremsvorrichtung für die Bereitstellung der geforderten Klemmkraft angefordert. Eine außerhalb des zulässigen Bereiches liegende Klemmkraftkennlinie deutet entweder auf einen fehlerhaften Zustand der Feststellbremse hin oder auf einen sonstigen äußeren Einfluss, der zu einer Kennlinienverschiebung führt.

Als weitere Maßnahme kommt auch die Erzeugung eines Fehlersignals in Betracht, welches dem Fahrer zur Anzeige gebracht oder in sonstiger Weise weiterverarbeitet wird.

Im Falle einer hydraulischen Zusatzbremsvorrichtung, die mit der Fahrzeugbremse identisch sein kann, ist durch die Bremspedalbetätigung durch den Fahrer ein hydraulischer Vordruck im Bremssystem erzeugbar, der auch auf die Feststellbremse wirkt. Der Vordruck kann zu einer virtuellen Verschiebung insbesondere des Kraftanstiegspunktes der Klemmkraftlinie führen, was zur Folge hat, dass die Feststellbremse von einer höheren wirkenden Klemmkraft ausgeht, als dies tatsächlich der Fall ist. Dies führt zu einer entsprechend reduzierten Betätigung des elektrischen Bremsmotors und der Einstellung eines zu geringen Klemmkraftniveaus.

Über den Vergleich der ermittelten Klemmkraftkennlinie mit dem Soll-Kennlinienbereich, der aus verschiedenen Verschleißzuständen der Bremsbeläge abgeleitet ist, kann eine Plausibilisierung des tatsächlichen Anstiegs im Klemmkraftverlauf durchgeführt werden. Nur wenn der tatsächliche Klemmkraftverlauf innerhalb des Soll-Kennlinienbereiches liegt, ist der Einfluss eines gegebenenfalls aufgebrachten hydraulischen Vordrucks gering genug, um keine signifikante Verschiebung im Verlauf der Klemmkraftkennlinie zu erhalten. Andernfalls müssen kompensierende Maßnahmen ergriffen werden, insbesondere eine höhere zusätzliche hydraulische Kraft erzeugt werden, um das geforderte Klemmkraftniveau zu erreichen.

Gemäß einer zweckmäßigen Weiterbildung ist in der Feststellbremse auch der Bremsbelagverschleiß ermittelbar. Damit können Einflüsse eines Bremsbelagverschleißes auf den Verlauf der Klemmkraftkennlinie berücksichtigt bzw. herausgerechnet werden, so dass in dem Vergleich der ermittelten Kennlinie mit dem Soll-Kennlinienbereich allein der Einfluss eines hydraulischen Vordrucks zum Tragen kommt.

Grundsätzlich möglich ist aber auch eine Ausführung ohne Belagsverschleißerkennung. In diesem Fall gibt der Vergleich zwischen der ermittelten Klemmkraftkennlinie und dem Soll-Kennlinienbereich allgemein einen Hinweis auf die Plausibilität des Klemmkraftverlaufs. Sofern der Verlauf nicht plausibel ist, können ungeachtet der Ursache Maßnahmen ergriffen werden wie zum Beispiel die zusätzliche Bereitstellung von Klemmkraft über die Zusatzbremsvorrichtung.

Als weitere kompensierende Maßnahme für den Fall, dass die Klemmkraftkennlinie außerhalb des zulässigen Bereiches liegt, kann auch ein geänderter Parametersatz für die elektromotorische Bremsvorrichtung verwendet werden.

Die tatsächliche Klemmkraftkennlinie wird zweckmäßigerweise aus motorischen Zustandsgrößen des elektrischen Bremsmotors ermittelt. Insbesondere der im Motorbremskreis fließende Strom, welcher gemessen werden kann, korrespondiert mit der Klemmkraft, so dass die Klemmkraft aus dem gemessenen Strom bestimmt werden kann.

Der betrachtete Klemmkraftverlauf, welcher dem Vergleich mit dem Soll-Kennlinienbereich zugrunde gelegt wird, betrifft vorteilhafterweise den Kennlinienanstieg in der Kraftaufbauphase, beginnend ab dem Kraftanstiegspunkt. Es kann aber auch zweckmäßig sein, den ersten Abschnitt der Kraftanstiegsphase auszulassen und einen darauf folgenden Abschnitt der Klemmkraftkennlinie zu berücksichtigen.

Das erfindungsgemäße Verfahren läuft in einem Regel- bzw. Steuergerät im Fahrzeug ab, das Bestandteil des Feststellbremssystems sein kann.

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt durch eine elektromechanische Feststellbremse für ein Fahrzeug, bei der die Klemmkraft über einen elektrischen Bremsmotor erzeugt wird,
- Fig. 2: ein Schaubild mit dem zeitabhängigen Verlauf des Stroms, der Spannung und der Motordrehzahl beim Zuspannvorgang der Feststellbremse,
- Fig. 3: eine Kraft-Weg-Kennlinie mit dem Verlauf der Klemmkraft innerhalb eines zulässigen Kennlinienbereichs.

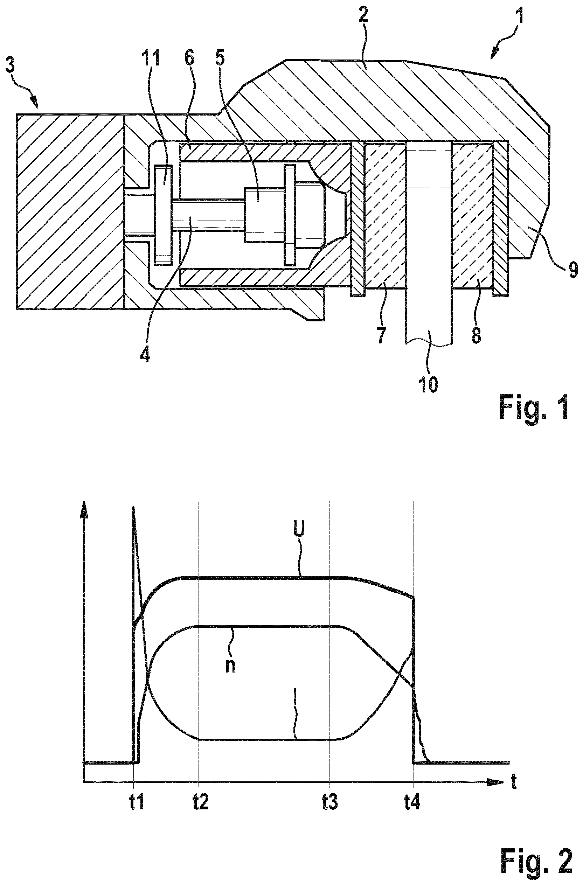

In Fig. 1 ist eine elektromechanische Feststellbremse 1 zum Festsetzen eines Fahrzeugs im Stillstand dargestellt. Die Feststellbremse 1 umfasst einen Bremssattel 2 mit einer Zange 9, welche eine Bremsscheibe 10 übergreift. Als Stellglied weist die Feststellbremse 1 einen Elektromotor als Bremsmotor 3 auf, der eine Spindel 4 rotierend antreibt, auf der ein Spindelbauteil 5 drehbar gelagert ist. Bei einer Rotation der Spindel 4 wird das Spindelbauteil 5 axial verstellt. Das Spindelbauteil 5 bewegt sich innerhalb eines Bremskolbens 6, der Träger eines Bremsbelags 7 ist, welcher von dem Bremskolben 6 gegen die Bremsscheibe 10 gedrückt wird. Auf der gegenüberliegenden Seite der Bremsscheibe 10 befindet sich ein weiterer Bremsbelag 8, der ortsfest an der Zange 9 gehalten ist.

Innerhalb des Bremskolbens 6 kann sich das Spindelbauteil 5 bei einer Drehbewegung der Spindel 4 axial nach vorne in Richtung auf die Bremsscheibe 10 zu bzw. bei einer entgegen gesetzten Drehbewegung der Spindel 4 axial nach hinten bis zum Erreichen eines Anschlags 11 bewegen. Zum Erzeugen einer Klemmkraft beaufschlagt das Spindelbauteil 5 die innere Stirnseite des Bremskolbens 6, wodurch der axial verschieblich in der Feststellbremse 1 gelagerte Bremskolben 6 mit dem Bremsbelag 7 gegen die zugewandte Stirnfläche der Bremsscheibe 10 gedrückt wird.

Die Feststellbremse kann erforderlichenfalls von einer hydraulischen Fahrzeugbremse unterstützt werden, so dass sich die Klemmkraft aus einem elektromotorischen Anteil und einem hydraulischen Anteil zusammensetzt. Bei der hydraulischen Unterstützung wird die dem Bremsmotor zugewandte Rückseite des Bremskolbens 6 mit unter Druck stehendem Hydraulikfluid beaufschlagt.

In Fig. 2 ist ein Schaubild mit dem Stromverlauf I, der Spannung U und dem Drehzahlverlauf n des elektrischen Bremsmotors zeitabhängig für einen Zuspannvorgang dargestellt. Zum Zeitpunkt t1 beginnt der Zuspannvorgang, indem eine elektrische Spannung aufgebracht und der Bremsmotor bei geschlossenem Stromkreis unter Strom gesetzt wird. Zum Zeitpunkt t2 haben die Spannung U und die Motordrehzahl n ihr Maximum erreicht. Die Phase zwischen t2 und t3 stellt die Leerlaufphase dar, in welcher der Strom I sich auf einem Minimumniveau bewegt. Daran schließt sich ab dem Zeitpunkt t3 die Kraftaufbauphase bis zum Zeitpunkt t4 an, in der die Bremsbeläge an der Bremsscheibe anliegen und mit zunehmender Klemmkraft F gegen die Bremsscheibe gedrückt werden. Zum Zeitpunkt t4 erfolgt das Abschalten des elektrischen Bremsmotors durch Öffnen des Stromkreises, so dass im weiteren Verlauf die Drehzahl n des Bremsmotors bis auf Null abfällt.

Mit der Phase des Kraftaufbaus zum Zeitpunkt t3 fällt der Kraftanstiegspunkt zusammen. Der Kraftaufbau bzw. der Verlauf der Klemmkraft F kann beispielsweise anhand des Verlaufs des Strom I des Bremsmotors ermittelt werden, der grundsätzlich den gleichen Verlauf wie die elektromechanische Klemmkraft aufweist. Ausgehend von dem niedrigen Niveau während der Leerphase zwischen t2 und t3 steigt der Stromverlauf zu Beginn des Zeitpunktes t3 steil an. Dieser Anstieg des Stroms kann detektiert und zum Bestimmen des Kraftanstiegspunktes herangezogen werden. Grundsätzlich kann der Verlauf des Kraftaufbaus aber auch aus dem Spannungs- oder Drehzahlverlauf bzw. aus einer beliebigen Kombination der Signale Strom, Spannung und Drehzahl bestimmt werden.

In Fig. 2 ist der Stromverlauf zeitabhängig dargestellt. Über eine beispielsweise sensorisch ermittelte Weginformation kann der zeitabhängige Verlauf in einen wegabhängigen Verlauf umgerechnet werden; gleiches gilt für den Verlauf der Klemmkraft F, die mit dem Strom I korrespondiert.

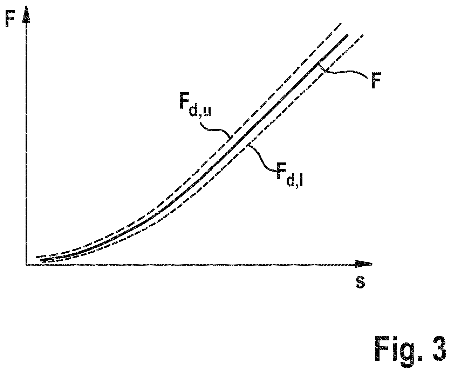

In Fig. 3 ist eine Kraft-Weg-Kennlinie mit dem Verlauf der Klemmkraft F, der wie vorbeschrieben aus dem Verlauf des Stroms I des elektrischen Bremsmotors ermittelt wird. Die Klemmkraft F ist mit durchgezogenem Strich dargestellt und liegt innerhalb eines mit strichlierter Linie begrenzten Soll-Kennlinienbereiches, wobei die untere Soll-Kennlinie F_{d,l} den Kraftverlauf für einen unverbrauchten Bremsbelag und die obere Soll-Kennlinie F_{d,U} den Kraftverlauf für einen verschlissenen Bremsbelag, beispielsweise einen maximal verschlissenen Bremsbelag darstellt.

Soweit die Feststellbremse mit einer Bremsbelagverschleißerkennung ausgestattet ist, kann ein eventuelles Abweichen des tatsächlichen Klemmkraftverlaufs F von dem Soll-Kennlinienbereich zwischen den Soll-Kennllinien F_{d,l} und F_{d,u} je nach Belagverschleißerkennung entweder auf einen tatsächlich vorliegenden Belagverschleiß oder auf einen hydraulischen Vordruck im Bremssystem zurückgeführt werden. Falls der Fahrer während des Kraftanstiegs der Feststellbremse das Bremspedal betätigt, führt der dadurch erzeugte hydraulische Vordruck zu einer zu steil ansteigenden Kraft-Weg-Kurve im Klemmkraftverlauf, woraufhin in der Feststellbremse über die elektromotorische Bremsvorrichtung eine zu geringe elektromechanische Klemmkraft eingestellt wird. Diese Situation kann über den Vergleich des Klemmkraftverlaufs F mit dem zugeordneten Soll-Kennlinienbereich unter Berücksichtigung der Belagverschleißerkennung detektiert werden.

## Patentansprüche

1. Verfahren zum Einstellen einer von einer Feststellbremse (1) ausgeübten Klemmkraft, die zumindest teilweise von einer elektromotorischen Bremsvorrichtung mit einem elektrischen Bremsmotor (3) und bedarfsweise von einer als hydraulische Fahrzeugbremse ausgebildeten Zusatzbremsvorrichtung erzeugt wird, **dadurch gekennzeichnet, dass** zur Plausibilisierung einer einzustellenden elektromechanischen Klemmkraft (F) des Bremsmotors (3) eine Klemmkraftkennlinie ermittelt und zumindest abschnittsweise mit einem Soll-Kennlinienbereich verglichen wird, der von Soll-Kennlinien der Klemmkraft für Bremsbeläge (7, 8) in unterschiedlichem Verschleißzustand begrenzt ist, wobei die elektromechanische Klemmkraft (F) in der vorgesehenen Weise eingestellt wird, wenn die ermittelte Klemmkraftkennlinie innerhalb des Soll-Kennlinienbereichs liegt, wobei ein durch die Bremspedalbetätigung durch den Fahrer in der hydraulische Fahrzeugbremse erzeugter hydraulischer Vordruck, der auf die Feststellbremse wirkt, in der Weise berücksichtigt wird, dass der Vordruck zu einer virtuellen Verschiebung des Kraftanstiegspunktes der Klemmkraftkennlinie führt.

2. Verfahren nach Anspruch 1, **dadurch gekennzeichnet, dass** für den Fall, dass die ermittelte Klemmkraftkennlinie außerhalb des Soll-Kennlinienbereichs liegt, zusätzliche Maßnahmen ergriffen werden.

3. Verfahren nach Anspruch 2, **dadurch gekennzeichnet, dass** über die Zusatzbremsvorrichtung eine zusätzliche Klemmkraft erzeugt wird.

4. Verfahren nach einem der Ansprüche 1 bis 3, **dadurch gekennzeichnet, dass** eine Soll-Kennlinie der Klemmkraft den durch Verschleiß maximal reduzierten Bremsbelag (7, 8) kennzeichnet.

5. Verfahren nach einem der Ansprüche 1 bis 4, **dadurch gekennzeichnet, dass** eine Soll-Kennlinie der Klemmkraft den nicht-verschlissenen Bremsbelag (7, 8) kennzeichnet.

6. Verfahren nach einem der Ansprüche 1 bis 5, **dadurch gekennzeichnet, dass** die Klemmkraftkennlinie aus motorischen Zustandsgrößen des elektrischen Bremsmotors (3) ermittelt wird.

7. Verfahren nach einem der Ansprüche 1 bis 6, **dadurch gekennzeichnet, dass** der tatsächliche Belagverschleiß berücksichtigt wird.

8. Regel- bzw. Steuergerät zur Durchführung des Verfahrens nach einem der Ansprüche 1 bis 7.

9. Feststellbremse in einem Fahrzeug mit einem Regel- bzw. Steuergerät nach Anspruch 8.

## Claims

1. Method for adjusting a clamping force applied by a parking brake (1), which clamping force is generated at least partially by an electromotive brake device having an electric brake motor (3) and, if necessary, by an additional brake device which is embodied as a hydraulic vehicle brake, **characterized in that** in order to check the plausibility of an electromechanical clamping force (F) which is to be set by the brake motor (3) a clamping force characteristic curve is acquired and is compared at least partially with a setpoint characteristic curve range which is bounded by setpoint characteristic curves of the clamping force for brake linings (7, 8) in a different state of wear, wherein the electromechanical clamping force (F) is set in the way provided if the acquired clamping force characteristic curve is within the setpoint characteristic curve range, wherein a hydraulic admission pressure which is generated in the hydraulic vehicle brake by the driver by activation of the brake pedal and acts on the parking brake is taken into account in such a way that the admission pressure brings about a virtual shift in the point of increase of force on the clamping force characteristic curve.

2. Method according to Claim 1, **characterized in that** in the event of the acquired clamping force characteristic curve being outside the setpoint characteristic curve range, additional measures are taken.

3. Method according to Claim 2, **characterized in that** an additional clamping force is generated by means of the additional brake device.

4. Method according to one of Claims 1 to 3, **characterized in that** a setpoint characteristic curve of the clamping force characterizes the brake lining (7, 8) which is reduced to a maximum extent by wear.

5. Method according to one of Claims 1 to 4, **characterized in that** a setpoint characteristic curve of the clamping force characterizes the non-worn brake lining (7, 8).

6. Method according to one of Claims 1 to 5, **characterized in that** the clamping force characteristic curve is acquired from motor state variables of the electric brake motor (3).

7. Method according to one of Claims 1 to 6, **characterized in that** the actual lining wear is taken into account.

8. Closed-loop or open-loop control unit for carrying out the method according to one of Claims 1 to 7.

9. Parking brake in a vehicle having a closed-loop or open-loop control unit according to Claim 8.

## Revendications

1. Procédé de réglage d'une force de serrage exercée par un frein de stationnement (1), qui est produite au moins en partie par un dispositif de freinage à moteur électrique avec un moteur électrique de freinage (3) et au besoin par un dispositif de freinage additionnel formé par un frein de véhicule hydraulique, **caractérisé en ce que** pour rendre plausible une force de serrage électromécanique (F) à régler du moteur de freinage (3), on détermine une courbe caractéristique de la force de serrage et on la compare au moins localement à une région de courbe caractéristique de consigne, qui est limitée par des courbes caractéristiques de consigne de la force de serrage pour des garnitures de frein (7, 8) à un degré d'usure différent, dans lequel on règle la force de serrage électromécanique (F) de la façon prévue, lorsque la courbe caractéristique de force de serrage déterminée se situe à l'intérieur de la région de courbe caractéristique de consigne, dans lequel on tient compte d'une pression hydraulique primaire produite dans le frein de véhicule hydraulique par l'actionnement de la pédale de frein par le conducteur, qui agit sur le frein de stationnement, de telle manière que la pression primaire conduise à un déplacement virtuel du point d'augmentation de la force de la courbe caractéristique de la force de serrage.

2. Procédé selon la revendication 1, **caractérisé en ce que**, dans le cas où la courbe caractéristique de la force de serrage déterminée se situe à l'extérieur de la région de courbe caractéristique de consigne, on prend des mesures supplémentaires.

3. Procédé selon la revendication 2, **caractérisé en ce que** l'on produit une force de serrage additionnelle au moyen du dispositif de freinage additionnel.

4. Procédé selon l'une quelconque des revendications 1 à 3, **caractérisé en ce qu'**une courbe caractéristique de consigne de la force de serrage caractérise la garniture de frein (7, 8) réduite au maximum par l'usure.

5. Procédé selon l'une quelconque des revendications 1 à 4, **caractérisé en ce qu'**une courbe caractéristique de consigne de la force de serrage caractérise la garniture de frein (7, 8) qui n'est pas usée.

6. Procédé selon l'une quelconque des revendications 1 à 5, **caractérisé en ce que** l'on détermine la courbe caractéristique de la force de serrage à partir de grandeurs d'état de moteur du moteur électrique de freinage (3).

7. Procédé selon l'une quelconque des revendications 1 à 6, **caractérisé en ce que** l'on tient compte de l'usure réelle des garnitures.

8. Appareil de régulation ou de commande permettant la mise en oeuvre du procédé selon l'une quelconque des revendications 1 à 7.

9. Frein de stationnement dans un véhicule muni d'un appareil de régulation ou de commande selon la revendication 8.
